# EUROPEAN PATENT APPLICATION

(11) **EP 4 624 289 A1**
(43) Date of publication of application: **01.10.2025**
(21) Application number: 25163206.3
(22) Date of filing: 12.03.2025
(51) Int. Cl.: B60T 13/74, B60T 17/22, B60T 13/58, B61H 1/00, F16D 49/16, F16D 121/10, F16D 121/16, F16D 121/24, F16D 123/00

(54) **UNIT BRAKE DEVICE**

(30) Priority: 28.03.2024 JP 2024054871
(71) Applicant: NABTESCO CORPORATION, Chiyoda-ku Tokyo 102-0093 (JP)
(72) Inventor: Sagawa, Takanori, Chiyoda-ku, Tokyo, 102-0093 (JP); Hamasaki, Mitsuyoshi, Chiyoda-ku, Tokyo, 102-0093 (JP); Morimoto, Kazunori, Chiyoda-ku, Tokyo, 102-0093 (JP); Inubuse, Tatsuo, Chiyoda-ku, Tokyo, 102-0093 (JP); Mitsue, Mayu, Chiyoda-ku, Tokyo, 102-0093 (JP)
(74) Representative: Grünecker Patent- und Rechtsanwälte PartG mbB

(57) **Abstract**

Provided is a unit brake device (1, 101, 201) that can drive a brake block (2) even if a first drive unit (20) becomes stuck or experiences other failures. The unit brake device (1) has: a first drive unit (20) including an electric motor (21) and a conversion mechanism (22) for converting rotational motion of the electric motor into linear motion, the first drive unit (20) being configured to use the linear motion to drive a brake block (2) toward a braking direction and toward a releasing direction that is opposite to the braking direction; and a second drive unit (15, 115, 215) configured to drive the brake block (2) toward at least one of the braking direction or the releasing direction by causing the first drive unit (20) to move.

## Description

### TECHNICAL FIELD

The present disclosure relates to a unit brake device.

### BACKGROUND

Japanese Patent Application Publication No. 2017-187074 discloses a brake drive device, where a feed screw, which is connected to the motor shaft of an electric motor, is screwed into a feed nut. As the motor shaft rotates, the feed screw and feed nut rotate relative to each other. As a result, the feed nut causes a push rod to reciprocate linearly. Here, the push rod is configured to generate a braking force to be applied to a brake device. A manual handle is provided at the end of the motor shaft. By rotating the manual handle, the motor shaft can be manually rotated to loosen the brake device.

### SUMMARY

The brake drive device disclosed in Japanese Patent Application Publication No. 2017-187074, however, cannot drive the brake device if the motor or ball screw becomes stuck. This issue is experienced not only by ball screws, but similar issues arise in any brake devices that have a transmission mechanism configured to convert rotational motion of a motor into linear motion.

The above-described problem can be solved by a unit brake device including: a first drive unit including an electric motor and a conversion mechanism for converting rotational motion of the electric motor into linear motion, the first drive unit being configured to use the linear motion to drive a brake block toward a braking direction and toward a releasing direction that is opposite to the braking direction; and a second drive unit configured to drive the brake block toward at least one of the braking direction or the releasing direction by causing the first drive unit to move.

The second drive unit may include: a supply source configured to feed power; and a transmission mechanism configured to transmit the power from the supply source to the first drive unit to cause the first drive unit to move toward the braking direction.

The unit brake device may further include a casing housing the first drive unit, the casing having a guide hole extending along the braking direction and the releasing direction; and a support portion supporting the first drive unit in such a manner that the first drive unit is movable toward the braking direction and the releasing direction in the casing. The transmission mechanism may be configured to transmit the power from the supply source to the first drive unit through the guide hole.

The support portion may have a first bushing and a second bushing receiving therein the first drive unit, and the first bushing may be located between the brake block and the second bushing in a direction in which the first drive unit is movable.

One of (i) an inner surface of the casing or (ii) an outer surface of the first drive unit may have a restricting unit configured to engage with another one of (i) the inner surface of the casing or (ii) the outer surface of the first drive unit to allow the first drive unit to move within a limited range.

The supply source may be a pneumatic actuator having: a cylinder configured to receive compressed air fed thereto; and a piston configured to move upon application of the compressed air to feed power to the transmission mechanism. The pneumatic actuator may have a pushback mechanism housed in the cylinder, the pushback mechanism being configured to energize the piston. The pushback mechanism may: keep the piston at a fixed position relative to the cylinder unless a force of a predetermined magnitude or greater acts upon the first drive unit toward the braking direction; and allow the piston to move relative to the cylinder if the force of the predetermined magnitude or greater acts on the first drive unit.

The transmission mechanism may include: a connecting mechanism connecting the supply source and the first drive unit in such a manner that the supply source and the first drive unit are movable relative to each other, an elastic member for energizing the connecting mechanism; and a switch unit configured to switch between (i) a force storing state where the elastic member stores force and (ii) a releasing state where the force storing state is released. When the switch unit establishes the force storing state, the power from the supply source may be transmitted to the first drive unit via the transmission mechanism and the first drive unit may move toward the releasing direction. When the switch unit establishes the releasing state, the elastic member may energize the connecting mechanism, and the connecting mechanism may cause the first drive unit to move toward the releasing direction.

The connecting mechanism may include: a feed screw connected to the supply source; and a nut engaging with the feed screw, the nut being configured to move relative to the feed screw. The switch unit may be an electromagnetic brake.

The transmission mechanism may have a lever connected to the first drive unit at a point of action and to the supply source at a point of force. The lever may be connected to opposing sides of the first drive unit and support the first drive unit.

The transmission mechanism may have an arm connecting the supply source and the lever. The transmission mechanism may include a converting unit configured to convert the power output from the supply source by changing an output direction of the power into a direction in which the first drive unit is movable by means of a slope, in order to use the power to cause the first drive unit to move.

### ADVANTAGEOUS EFFECTS

According to the present disclosure, the brake block can be driven even if the first drive unit becomes stuck or other similar problem occurs.

### BRIEF DESCRIPTION OF THE DRAWINGS

Fig. 1 is a perspective view showing a unit brake device relating to a first embodiment.
Fig. 2 is a sectional view showing the unit brake device shown in Fig. 1.
Fig. 3 schematically illustrates how the unit brake device shown in Fig. 1 works.
Fig. 4 schematically illustrates how the unit brake device shown in Fig. 1 works.
Fig. 5 schematically illustrates how the unit brake device shown in Fig. 1 works.
Fig. 6 is a sectional view showing how a unit brake device relating to a second embodiment works.
Fig. 7 schematically shows how the unit brake device shown in Fig. 6 works.
Fig. 8 schematically shows how the unit brake device shown in Fig. 6 works.
Fig. 9 is a perspective view showing a unit brake device relating to a third embodiment.
Fig. 10 is a sectional view showing the unit brake device shown in Fig. 9.
Fig. 11 is an enlarged side view showing how the unit brake device shown in Fig. 9 works.
Fig. 12 is a sectional view showing how the unit brake device shown in Fig. 9 works.
Fig. 13 is a side view showing how the unit brake device shown in Fig. 9 works.
Fig. 14 is a sectional view showing how the unit brake device shown in Fig. 9 works.
Fig. 15 is a side view showing how the unit brake device shown in Fig. 9 works.
Fig. 16 is a sectional view showing how the unit brake device shown in Fig. 9 works.
Fig. 17 is a side view showing how the unit brake device shown in Fig. 9 works.
Fig. 18 is a perspective view showing a unit brake device relating to a fourth embodiment.
Fig. 19 is a sectional view showing the unit brake device shown in Fig. 18.
Fig. 20 schematically shows how the unit brake device shown in Fig. 18 works.
Fig. 21 is a sectional view showing how a supply unit of the unit brake device shown in Fig. 18 works.
Fig. 22 schematically shows how the unit brake device shown in Fig. 18 works.
Fig. 23 is a sectional view showing how the supply unit of the unit brake device shown in Fig. 18 works.
Fig. 24 schematically shows how the unit brake device shown in Fig. 18 works.
Fig. 25 is a sectional view showing how the supply unit of the unit brake device shown in Fig. 18 works.
Fig. 26 is a side view showing a modification example of a unit brake device.

### DESCRIPTION OF THE PREFERRED EMBODIMENTS

### <First Embodiment>

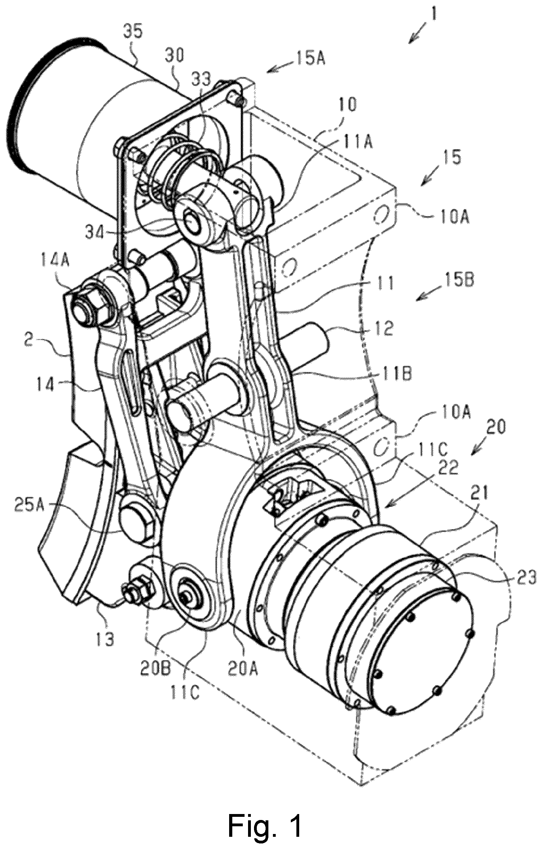

With reference to Figs. 1 to 5, the following describes a unit brake device according to a first embodiment. A unit brake device presses a brake block against the tread of a wheel of a railway vehicle. Here, a tread brake device is constituted by a wheel of a railway vehicle and a unit brake device.

### <Unit Brake Device 1>

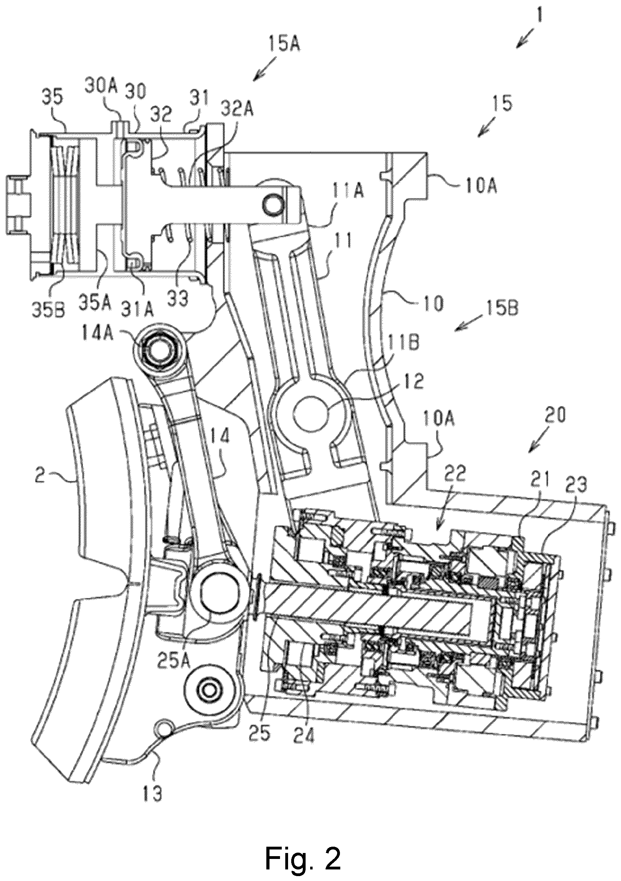

As shown in Figs. 1 and 2, a unit brake device 1 drives a brake block 2, so that the brake block 2 may be pressed against the tread of a wheel of a railway vehicle. The unit brake device 1 has a first drive unit 20 and a second drive unit 15.

### <First Drive Unit 20>

The first drive unit 20 has an electric motor 21 and a conversion mechanism 22. The electric motor 21 is an electric motor. The conversion mechanism 22 converts the rotational motion produced by the electric motor 21 into linear motion. The first drive unit 20 uses the linear motion to cause the brake block 2 to move toward a braking direction, so that the brake block 2 can be pressed against the tread of a wheel (not shown). The first drive unit 20 has an electromagnetic brake 23 configured to stop the rotation of the electric motor 21.

The conversion mechanism 22 has a sheath rod 24 that is shaped like a circular tube and configured to rotate when driven by the electric motor 21. The sheath rod 24 is internally threaded. The conversion mechanism 22 has a push rod 25 that is threadedly coupled to the inner surface of the sheath rod 24. The push rod 25 is externally threaded. The base end of the push rod 25 is screwed into and threadedly coupled with the sheath rod 24. Onto the other end of the push rod 25, a shoe head 13 is rotatably attached by means of a connecting pin 25A. A hanger 14 is rotatably provided on a casing 10 by means of a connecting pin 14A. The shoe head 13 is rotatably attached to the hanger 14 by means of the connecting pin 25A. The brake block 2 is attached onto the shoe head 13.

Upon rotation of the electric motor 21 of the first drive unit 20, the sheath rod 24 rotates, so that the push rod 25 is threadedly driven. The push rod 25 and brake block 2 then move toward the braking direction, or toward the tread of the wheel. The brake block 2 is then pressed against the tread of the wheel, thereby applying braking to the rotation of the wheel 3. As the rotation of the electric motor 21 increases, the movement of the push rod 25 increases. Therefore, the amount by which the brake block 2 is pressed against the tread of the wheel, or the amount of friction increases. On the other hand, as the electric motor 21 rotates in the reverse direction, the sheath rod 24 also rotates in the reverse direction, so that the push rod 25 is then threadedly driven in the reverse direction. The push rod 25 and brake block 2 then move toward a releasing direction, or move away from the tread of the wheel. As a result, the braking applied to the rotation of the wheel 3 is released.

### <Second Drive Unit 15>

The second drive unit 15 is configured to cause the first drive unit 20 to move, so that the brake block 2 can move toward the braking direction and releasing direction that is opposite to the braking direction. The second drive unit 15 has a supply source 15A and a transmission mechanism 15B. The supply source 15A supplies power that can cause the first drive unit 20 to move toward the braking direction. The transmission mechanism 15B transmits the power fed from the supply source 15A to the first drive unit 20, so that the first drive unit 20 can move toward the braking direction. The second drive unit 15 functions as a security brake that can drive the brake block 2 in place of the first drive unit 20.

The unit brake device 1 has a casing 10 that houses the first and second drive units 20 and 15. The casing 10 has a mounting portion 10A on the rear side (the right side in Fig. 2) by which the casing 10 can be mounted onto a bogie of the railway vehicle. The transmission mechanism 15B has a lever 11 that is connected to the supply source 15A and that is configured to move the first drive unit 20. The lever 11 has a support portion 11B at the middle in the longitudinal direction. The support portion 11B of the lever 11 is penetrated by a support shaft 12. The lever 11 is mounted on the casing 10 in a rotatable manner by means of the support shaft 12. The support portion 11B serves as the fulcrum of the lever 11. The lever 11 has a Y-shaped end 11C that is connected to the peripheral surface 20A of the first drive unit 20 at opposing sides and that supports the first drive unit 20. The end 11C of the lever 11 is connected to the first drive unit 20 by means of a connecting pin 20B in a rotatable manner. In other words, the lever 11 is connected to the first drive unit 20 at the end 11C. The end 11C, where the lever 11 is connected to the first drive unit 20, serves as the point of action of the lever 11. The base end 11A of the lever 11 serves as the point of force. The lever 11 can cause the first drive unit 20 to move upon application of power to the point of force from the supply source 15A. The first drive unit 20 is suspended in the casing 10 as the support portion 11B of the lever 11 is supported by the support shaft 12.

### <First Pneumatic Actuator 30>

The supply source 15A is a first pneumatic actuator 30. The first pneumatic actuator 30 has a bottomed cylinder 31 that has a tubular shape, and a piston 32. The cylinder 31 receives compressed air. Upon being moved by the compressed air, the piston 32 feeds power to the transmission mechanism 15B. The first pneumatic actuator 30 has a pushback mechanism 35. The first pneumatic actuator 30 is provided on the upper portion of the front side of the casing 10 or the left side in Fig. 2. The first pneumatic actuator 30 has a return spring 33, and the return spring 33 energizes the piston 32. The piston 32 has a piston rod 32A at the end, and the piston rod 32A protrudes into the casing 10. The piston rod 32A is rotatably connected by means of a connecting pin 34 to the base end 11A, which serves as the point of force of the lever 11.

The cylinder 31 has a supply port 30A in the top portion, through which the compressed air is fed into the cylinder 31. The compressed air is fed to a working chamber 31A defined by the cylinder 31 and the piston 32. As the compressed air is fed into the working chamber 31A of the first pneumatic actuator 30, the piston rod 32A moves in such a direction that the piston rod 32A protrudes out of the cylinder 31 (toward the right side in Fig. 1). As a result, the lever 11 rotates clockwise in Fig. 1. On the other hand, as the compressed air is discharged from the working chamber 31A of the first pneumatic actuator 30, the return spring 33 causes the piston 32 to move toward the bottom surface of the cylinder 31 (toward the left side in Fig. 1). As a result, the lever 11 rotates counterclockwise in Fig. 1.

The pushback mechanism 35 has a piston 35A and an absorbing spring 35B. The piston 35A is coaxial with the piston 32 of the first pneumatic actuator 30, and abuts against the piston 32 of the first pneumatic actuator 30. The absorbing spring 35B energizes the piston 35A of the pushback mechanism 35 toward the first pneumatic actuator 30. The pushback mechanism 35 keeps the piston 32 to remain at a fixed position relative to the cylinder 31 unless a force of a predetermined magnitude or greater acts upon the first drive unit 20 in the direction opposite to the releasing direction. On the other hand, if a force of a predetermined magnitude or greater acts upon the first drive unit 20, the piston 32 of the first pneumatic actuator 30 pushes the piston 35A of the pushback mechanism 35. The absorbing spring 35B is then compressed to absorb the applied force, and the pushback mechanism 35 pushes the piston 32 back. The absorbing spring 35B does not energize the piston 35A in a normal circumstance, but absorbs the movement of the piston 35A only upon application of reaction force of a predetermined magnitude or greater from the point of action of the lever 11 and pushes the piston 35A back.

### <How First Embodiment Works>

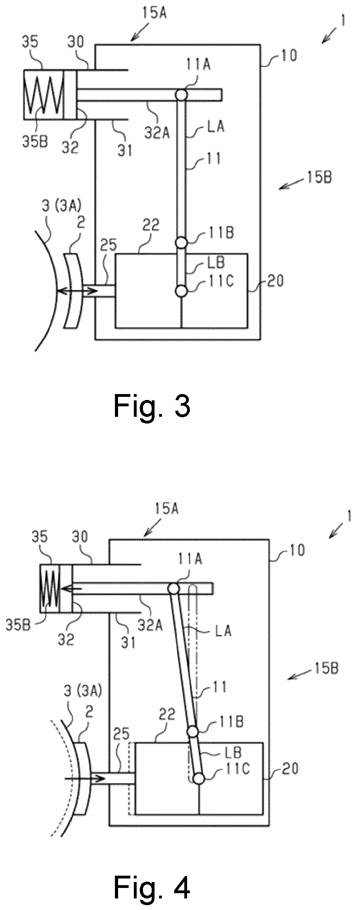

The following now describes how the unit brake device 1 configured as described above works with reference to Figs. 3 to 5.

### <Normal Circumstance>

As shown in Fig. 3, in a normal circumstance where the first pneumatic actuator 30 is not in operation, the first drive unit 20 remains at a fixed position since the first pneumatic actuator 30 is connected with the first drive unit 20 via the lever 11. The first drive unit 20 drives the electric motor 21 to cause the push rod 25 to move in the braking direction, or toward the left direction in Fig. 3. As a result, the brake block 2 is pressed against the tread 3A of the wheel 3, thereby applying braking the wheel 3. The first drive unit 20 may alternatively drive the electric motor 21 in the opposite direction to cause the push rod 25 to move in the releasing direction, or toward the right direction in Fig. 3. As a result, the brake block 2 moves away from the tread 3A of the wheel 3, thereby releasing the braking on the wheel 3.

### <During Pressing>

As shown in Fig. 4, while the brake block 2 is pressed against the tread 3A of wheel 3, the position of the wheel 3 may change, and reaction force, which acts in the opposite direction to the pressing force, may act on the first drive unit 20 more significantly than anticipated. In such a case, the reaction force resulting from the pressing force is transmitted to the piston 32 of the first pneumatic actuator 30 via the lever 11. The piston 32 may then move to the left direction in Fig. 4, the absorbing spring 35B of the pushback mechanism 35 contracts to absorb the reaction force. The reaction force acting on the pushback mechanism 35 is less than the reaction force acting on the first drive 20 since the length LA from the base end 11A of the lever 11 to the support portion 11B is greater than the length LB from the end 11C to the support portion 11B (LA>LB).

### <During Security Braking>

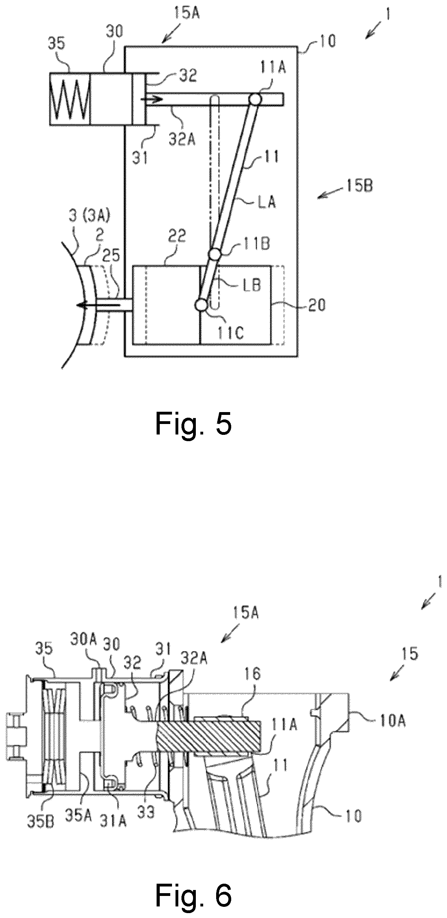

The push rod 25 of the first drive unit 20 or electric motor 21 may become immobile, and the first drive unit 20 cannot drive the brake block 2 out of the released state. In this case, the first pneumatic actuator 30 drives the brake block 2, as shown in Fig. 5. The second drive unit 15 serve as a security brake. As the compressed air is fed into the cylinder 31 of the first pneumatic actuator 30, the piston 32 of the first pneumatic actuator 30 protrudes out of the cylinder 31. The lever 11 then rotates clockwise around the support shaft 12 in Fig. 5, and the brake block 2 is pressed against the tread 3A of the wheel 3. As a result, the wheel 3 is braked. As the amount of rotation of the lever 11 increases, the amount by which the brake block 2 is pressed against the tread 3A of wheel 3, in other words, the friction increases. On the other hand, as the compressed air is discharged from the cylinder 31 of the first pneumatic actuator 30, the piston 32 of the first pneumatic actuator 30 moves back into the cylinder 31. The lever 11 then rotates counterclockwise around the support shaft 12 in Fig. 5, and the brake block 2 moves away from the tread 3A of the wheel 3. As a result, the braking applied to the rotation of the wheel 3 is released. The power output from the first pneumatic actuator 30, which causes the brake show 2 to move, increases since the length LA from the base end 11A of the lever 11 to the support portion 11B is greater than the length LB from the end 11C to the support portion 11B (LA>LB).

### <Advantageous Effects of First Embodiment>

Advantageous effects of the first embodiment will be now described. (1-1) The conversion mechanism 22 may become stuck or experience other failures, and the first drive unit 20 may resultantly become incapable of driving the brake block 2. In this case, the second drive unit 15 can cause the first drive unit 20 to move. Accordingly, the brake block 2 as well as the first drive unit 20 can be drive.

(1-2) Upon application of braking, excessive reaction force may occur but can be absorbed by the pushback mechanism 35, which is provided in the cylinder 31 of the first pneumatic actuator 30. There is thus no need of independently providing the pushback mechanism 35 from the first pneumatic actuator 30. Accordingly, the unit brake device 1 can be installed within a reduced space.

(1-3) The power to cause the first drive unit 20 to move is transmitted from the supply source 15A via the lever 11. Therefore, the first pneumatic actuator 30, which serves as the supply source 15A to feed power to the lever 11, can be located away from the first drive unit 20. The first drive unit 20 can be saved from having an increased size.

(1-4) The end 11C of the lever 11 is connected to the opposing sides of the first drive unit 20. Therefore, the lever 11 can stably support the first drive unit 20.

### <Second Embodiment>

With reference to Figs. 6 to 8, the following describes a unit brake device according to a second embodiment. The second embodiment is different from the first embodiment in that the connection between the supply source 15A and the transmission mechanism 15B can be switched. The following description will be focused on the differences from the first embodiment.

As shown in Fig. 6, the second drive unit 15 has a nut 16. The nut 16 is penetrated by a piston rod 32A and connected to the base end 11A of the lever 11. Although not shown, the nut 16 has a release mechanism. The release mechanism establishes or breaks the connection between the piston rod 32A and the nut 16. For example, the release mechanism makes use of magnetic and spring force. The release mechanism may eliminate the magnetic force and use the spring force to establish connection between the piston rod 32A and the nut 16, and may generate the magnetic force to offset the spring force to disconnect the connection. The release mechanism may mechanically establish the connection between the piston rod 32A and the nut 16, and disconnect the connection. With the piston rod 32A and nut 16 being connected, power is transmitted from the first pneumatic actuator 30 to the lever 11. On the other hand, no power transmission takes place without the connection between the piston rod 32A and the nut 16.

### <When Second Drive Unit 15 is Driven by Power from Supply Source 15A>

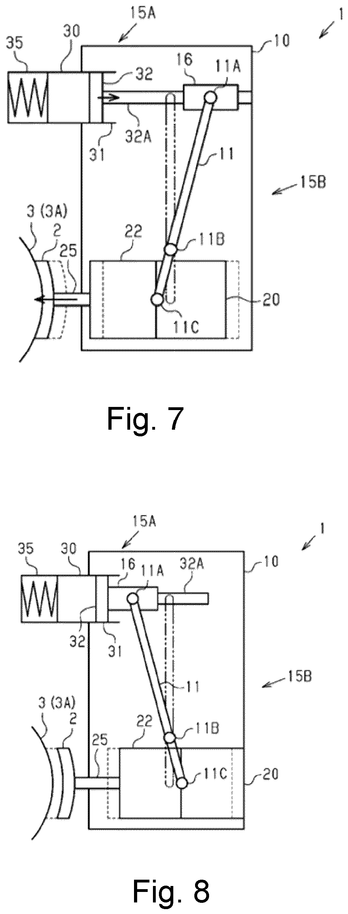

The push rod 25 of the first drive unit 20 or electric motor 21 may become immobile, so that the first drive unit 20 may become incapable of driving the brake block 2. In this case, the first pneumatic actuator 30 drives the brake block 2 as shown in Fig. 7. The second drive unit 15 serves as a security brake. In this case, the release mechanism establishes the connection between the piston rod 32A and the nut 16. To apply braking to the wheel 3, the compressed air is supplied to the working chamber 31A of the first pneumatic actuator 30, and the piston 32 of the first pneumatic actuator 30 resultantly protrudes out of the cylinder 31. The lever 11 then rotates clockwise around the support shaft 12 in Fig. 7, and the brake block 2 is pressed against the tread 3A of the wheel 3, thereby applying braking to the wheel 3. As the amount of rotation of the lever 11 increases, the amount by which the brake block 2 is pressed against the tread 3A of wheel 3, in other words, the friction increases.

On the other hand, as the compressed air is discharged from the cylinder 31 of the first pneumatic actuator 30, the piston 32 of the first pneumatic actuator 30 moves back into the cylinder 31. The lever 11 then rotates counterclockwise around the support shaft 12 in Fig. 5, and the brake block 2 moves away from the tread 3A of the wheel 3. As a result, the braking applied to the rotation of the wheel 3 is released.

### <When Braking is Released by Release Mechanism of Second Drive Unit 15>

As shown in Fig. 8, when the release mechanism disconnects the connection between the piston rod 32A and the nut 16, the first drive unit 20 is allowed to move. If the electric motor 21 locks up due to a short circuit or other cause, or if the first pneumatic actuator 30 becomes inoperable, the first drive unit 20 or brake block 2 can be moved manually, so that the brake block 2 as well as the first drive unit 20 can move away from the tread 3A of the wheel 3. Alternatively, the nut 16 can be moved manually. In this case, by means of the lever 11, the brake block 2 as well as the first drive unit 20 can move away from the tread 3A of the wheel 3 together with the first drive unit 20 via the leverage 11.

### <Advantageous Effects of Second Embodiment>

Advantageous effects of the second embodiment will be now described. The second embodiment produces the following advantageous effects in addition to the effects produced by the first embodiment.

(2-1) The first drive unit 20 or supply source 15A may become incapable of moving the brake block 2 while the brake block 2 remains pressing the wheel 3. In this case, the uncoupling mechanism can disconnect the connection between the piston rod 32A and the nut 16 to allow the first drive unit 20 to move. As a result, the brake block 2 can move toward the releasing direction, so that the brake block 2 as well as the first drive unit 20 can move away from the wheel 3. This can further contribute to safety since the braking can be released even if the first drive unit 20 or supply source 15A becomes stuck or experiences other failures.

### <Third Embodiment>

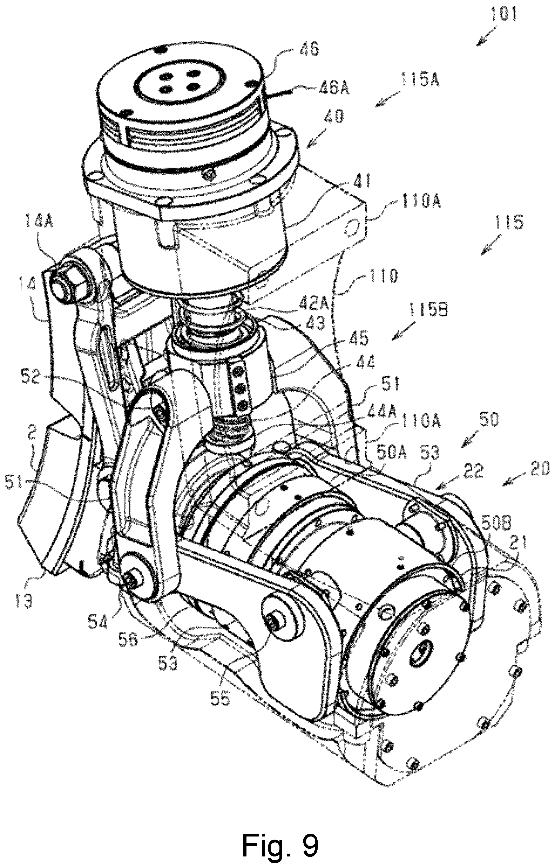

With reference to Figs. 9 to 17, the following describes a unit brake device according to a third embodiment. The third embodiment is different from the first embodiment described above in terms of the configuration of the second drive unit. The following description will be focused on the differences from the first embodiment.

### <Unit Brake Device 101>

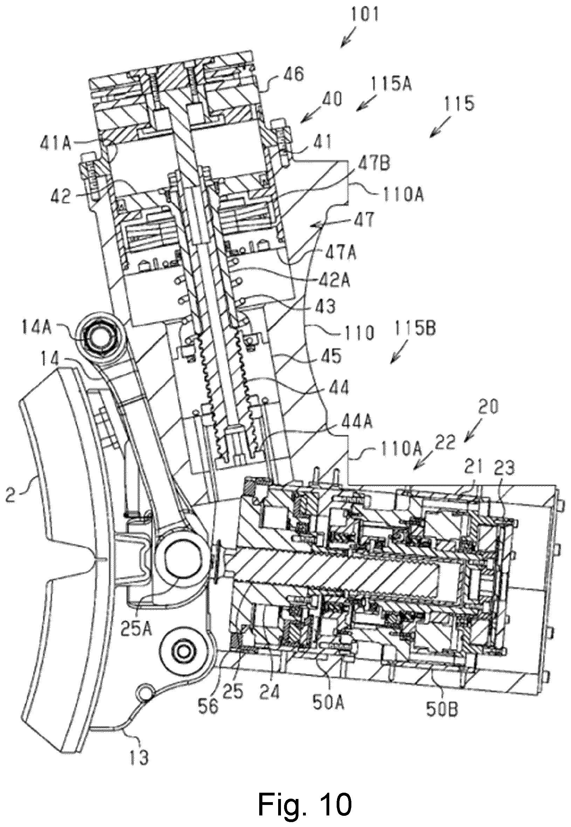

As shown in Figs. 9 and 10, the unit brake device 101 has a first drive unit 20 and a second drive unit 115. The first drive unit 20 is configured in the same manner as in the first embodiment.

### <Second Drive Unit 115>

While braking is being applied, the first drive unit 20 presses the brake block 2 against the tread of the wheel. The second drive unit 115 releases the braking by causing the first drive unit 20 to move toward the releasing direction, that is to say, such that the brake block 2 moves away from the wheel. The second drive unit 115 has a supply source 115A and a transmission mechanism 115B. The supply source 115A supplies power to cause the first drive unit 20 to move toward the braking direction. The transmission mechanism 115B transmits the power from the supply source 115A to the first drive unit 20, thereby causing the first drive unit 20 to move toward the braking direction.

The unit brake device 101 has a casing 110 that houses the first and second drive units 20 and 115. The casing 110 has a mounting portion 110A on the rear side (the right side in Fig. 10) by which the casing 110 can be mounted onto a bogie of the railway vehicle. The inner wall of the casing 110 has a housing portion 50 where the first drive unit 20 is housed. The unit brake device 101 has a first bushing 50A and a second bushing 50B, which serve as a support portion. The first and second bushings 50A and 50B are fixedly attached to the inner wall of the casing 110. The first and second bushings 50A and 50B receive therein the first drive unit 20 and support the first drive unit 20 such that it is movable in the direction in which the brake block 2 can move. The second bushing 50B is located at a greater distance from the brake block 2 than is the first bushing 50A toward the releasing direction. The first and second bushings 50A and 50B have a low coefficient of friction. For example, the first and second bushings 50A and 50B are metal bushings, resin bushings, linear bushings, etc. Therefore, since the first drive unit 20 is supported by the entire casing 110, the weight of the first drive unit 20 is received by a large area, thereby reducing the surface pressure and preventing sliding-induced wear. The inner surface of the casing 110 has a restricting unit 56. The restricting unit 56 is an annular member and fixedly attached onto the inner surface of the casing 110. The restricting unit 56 allows the first drive unit 20 to move toward the braking direction by a distance within a limited range. The first drive unit 20 butts up against the restricting unit 56 if the first drive unit 20 moves toward the braking direction by a predetermined distance.

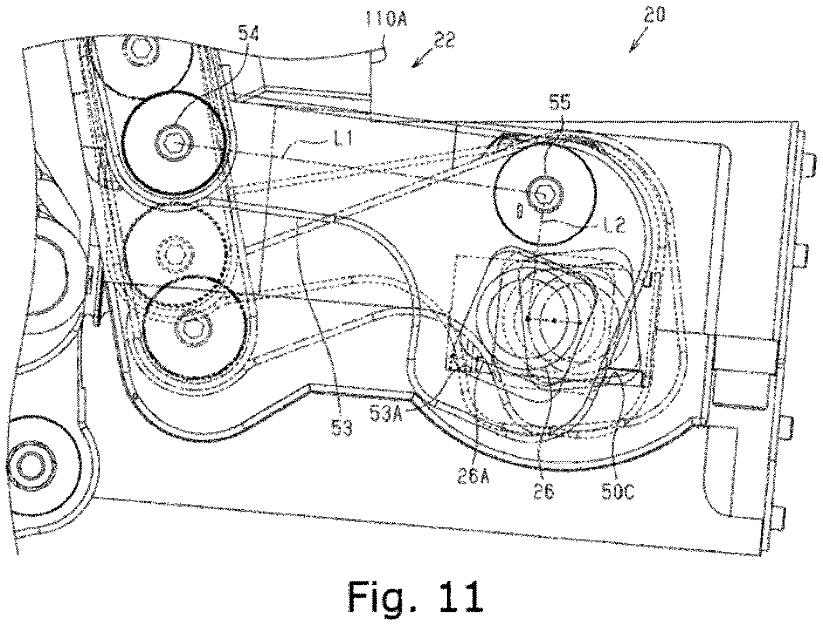

As shown in Figs. 9 and 11, the second drive unit 115 has L-shaped levers 53 that can cause the first drive unit 20 to move. The L-shaped levers 53 are connected to the opposing sides of the first drive unit 20. Each of the L-shaped levers 53 is rotatably connected to the second bushing 50B by means of a connecting pin 55. The connecting pin 55 serves as the fulcrum. The connecting pin 55 is located at the corner of the L-shape. Each of the L-shaped levers 53 is connected at one end (first end) to the first drive unit 20, and the point where the lever 53 is connected with the first drive unit 20 serves as the point of action. The other end (second end) of the L-shaped lever 53 serves as the point of force. The ratio of the distance L1 to the distance L2 is 3:1 (L1:L2 = 3:1), where the distances L1 and L2 respectively denote the distance between the fulcrum and the point of force and the distance between the fulcrum and the point of action. The angle θ between the line connecting the fulcrum and the point of force and the line connecting the fulcrum and the point of action is 90°.

As shown in Fig. 11, the casing 110 has a guide hole 50C along which the first drive unit 20 is guided to move toward the braking and releasing directions upon application of the power transmitted from the transmission mechanism 115B. The guide hole 50C corresponds to a guide portion. The first drive unit 20 has a connecting shaft 26 that passes through the guide hole 50C and is connected to the first end of the L-shaped lever 53. The base end of the connecting shaft 26 is fixedly attached to the first drive unit 20. At the other end of the connecting shaft 26, a connecting member 26A is provided. The connecting member 26A is shaped like a rectangular parallelepiped and connected to the L-shaped lever 53. The connecting shaft 26 and connecting member 26A are connected by means of a bearing, and the connecting member 26A can rotate relative to the connecting shaft 26. The first end of each L-shaped lever 53 has a surface facing the first drive unit 20 that has a connecting recess 53A that is greater in size than the connecting member 26A. The connecting member 26A is moved by the L-shaped lever 53 by fitting into the connecting recess 53A and contacting the inner wall of the connecting recess 53A. The connecting shaft 26 and connecting member 26A move toward the braking and releasing directions together with the first drive unit 20. On the other hand, the L-shaped lever 53 and connecting recess 53A move in a rotational manner around the fulcrum, that is to say, the connecting pin 55. For this reason, the connecting recess 53A has a length greater than the length of the connecting member 26A in the radial direction defined in relation with the rotation of the L-shaped lever 53. This allows the connecting member 26A to move in the radial direction defined in relation with the rotation of the L-shaped lever 53. In the above-described manner, the transmission mechanism 115B can transmit via the guiding hole 50C the power from the supply source 115A to the first drive unit 20.

### <Second Pneumatic Actuator 40>

As shown in Fig. 10, the supply source 115A is a second pneumatic actuator 40. The second pneumatic actuator 40 has a bottomed cylinder 41 that is shaped like a tube, and a piston 42. Compressed air is supplied to the cylinder 41. The piston 42 is moved by the compressed air to power the transmission mechanism 115B. The second pneumatic actuator 40 has a pushback mechanism 47. The second pneumatic actuator 40 is provided in the upper portion of the casing 110. The second pneumatic actuator 40 has a return spring 43, which energizes the piston 42. A piston rod 42A is provided at the tip end of the piston 42.

The cylinder 41 has a supply port (not shown) through which compressed air is fed into the cylinder 41. The compressed air is fed to a working chamber 41A defined by the cylinder 41 and the piston 42. The second pneumatic actuator 40 operates as follows. As the compressed air is supplied into the working chamber 41A, the piston rod 42A moves toward such a direction that the piston rod 42A protrudes out of the cylinder 41 (toward the lower side in Fig. 10). On the other hand, as the compressed air is discharged from the working chamber 41A of the second pneumatic actuator 40, the return spring 43 causes the piston 42 to move toward the bottom side of the cylinder 41 (toward the upper side in Fig. 10).

The pushback mechanism 47 is provided between the piston 42 of the second pneumatic actuator 40 and the return spring 43. The pushback mechanism 47 has a piston 47A and an absorbing spring 47B. The piston 47A is coaxial with the piston 42 of the second pneumatic actuator 40. The absorbing spring 47B energizes the piston 47A of the pushback mechanism 47 away from the second pneumatic actuator 40. The pushback mechanism 47 keeps the piston 42 of the second pneumatic actuator 40 at a fixed position relative to the cylinder 41 unless a force of a predetermined magnitude or greater acts upon the first drive unit 20 in the direction opposite to the releasing direction. On the other hand, if a force of a predetermined magnitude or greater acts upon the first drive unit 20, the piston 42 is pulled downward and accordingly compresses the absorbing spring 47B of the pushback mechanism 47. The pushback mechanism 47 thus absorbs the applied force and pushes the piston 42 back. The absorbing spring 47B does not energize the piston 47A in a normal circumstance, but absorbs the movement of the piston 47A upon application of reaction force of a predetermined magnitude or greater from the point of action of the L-shaped lever 53 and pushes the piston 47A back.

As shown in Figs. 9 and 10, the transmission mechanism 115B has a return spring 43, a feed screw 44, a nut 45, and a switch unit 46. The return spring 43 serves as an elastic member. The feed screw 44 is connected to the piston rod 42A of the second pneumatic actuator 40. The nut 45 is fittedly engaged with the feed screw 44 and can move relative to the feed screw 44. The feed screw 44 and nut 45 serve as a connecting mechanism configured to connect the supply source 115A and first drive unit 20 such that they can move relative to each other. The switch unit 46 can switch between a force storing state where the return spring 43 stores force, and a releasing state where the force storing state is released. The switch unit 46 is an electromagnetic brake, connected to the feed screw 44, and configured to restrict rotation of the feed screw 44. The switch unit 46 has an operation lever 46A that protrudes externally. When operated, the operation lever 46A can switch between the force storing state and the releasing state, in other words, between the restricting state and the releasing state. The feed screw 44 has a restricting unit 44A at the tip end. The nut 45 is restricted from moving downward relative to the feed screw 44 by abutting against the restricting unit 44A. This can result in restricting the amount of movement of the first drive unit 20.

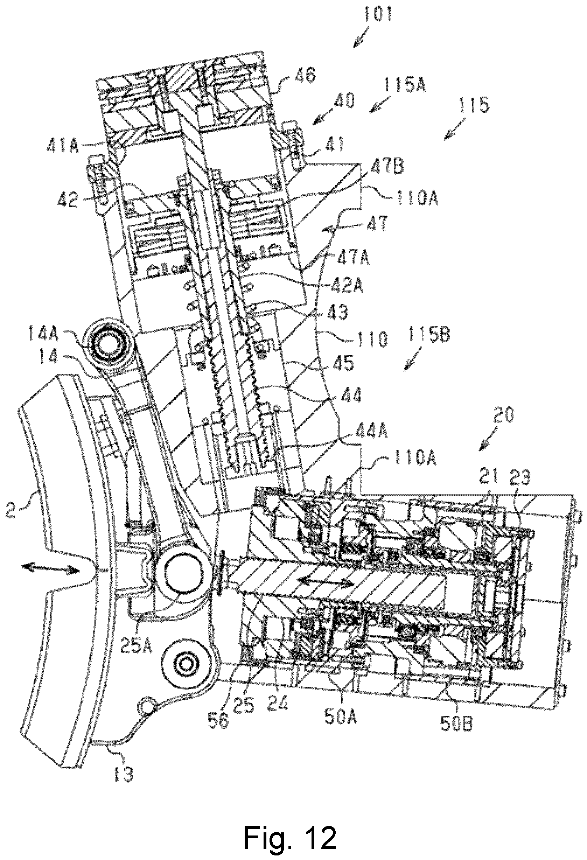

If the switch unit 46 restricts the rotation of the feed screw 44, the return spring 43 is placed in the force storing state, and the nut 45 moves together with the piston 42 of the second pneumatic actuator 40. As a result, the power supplied from the second pneumatic actuator 40 can drive the first drive unit 20. In other words, if the switch unit 46 achieves the force storing state, the power is transmitted from the supply source 115A to the first drive unit 20 via the feed screw 44 and nut 45, causing the first drive unit 20 to move toward the releasing direction. On the other hand, if the switch unit 46 releases the restriction on the rotation of the feed screw 44, the energizing force produced by the return spring 43 can cause the feed screw 44 to rotate in the nut 45. As a result, the nut 45 moves toward the tip end of the feed screw 44 (toward the lower side in Fig. 12). In other words, if the switch unit 46 achieves the releasing state, the return spring 43 energizes the nut 45, and the nut 45 causes the first drive unit 20 to move toward the releasing direction. In this manner, the first drive unit 20 can be moved toward the releasing direction without utilizing the power supplied by the second pneumatic actuator 40.

As shown in Fig. 9, the transmission mechanism 115B has arms 51. Each arm 51 is provided between the corresponding L-shaped lever 53 and the second pneumatic actuator 40. The arm 51 is connected at the upper end to the nut 45 by means of a connecting pin 52. The arm 51 is connected at the lower end to the second end of the L-shaped lever 53, which is the point of force, by means of a connecting pin 54. As the nut 45 moves together with the piston 42 of the second pneumatic actuator 40, the arm 51 moves upward or downward. The movement of the arm 51 results in transmission of the power to the point of force of the L-shaped lever 53.

### <How Third Embodiment Works>

The following now describes how the unit brake device 101 configured as described above works with reference to Figs. 12 to 17.

### <Normal Circumstance>

As shown in Fig. 12, in a normal circumstance, the switch unit 46 restricts the rotation of the feed screw 44, so that the nut 45 remains at a fixed position relative to the feed screw 44. Therefore, the arms 51 and L-shaped levers 53 remain stationary unless the second pneumatic actuator 40 is in operation. Therefore, the first drive unit 20 remains at a fixed position. The first drive unit 20 drives the electric motor 21 in order to cause the push rod 25 to move toward the braking direction, or toward the left direction in Fig. 12. As a result, the brake block 2 is pressed against the tread of the wheel, thereby applying braking to the wheel. Alternatively, the first drive unit 20 drives the electric motor 21 in the opposite direction in order to cause the push rod 25 to move toward the releasing direction, or toward the right direction in Fig. 12. As a result, the brake block 2 moves away from the tread of the wheel, thereby releasing the braking applied onto the wheel.

### <During Pressing>

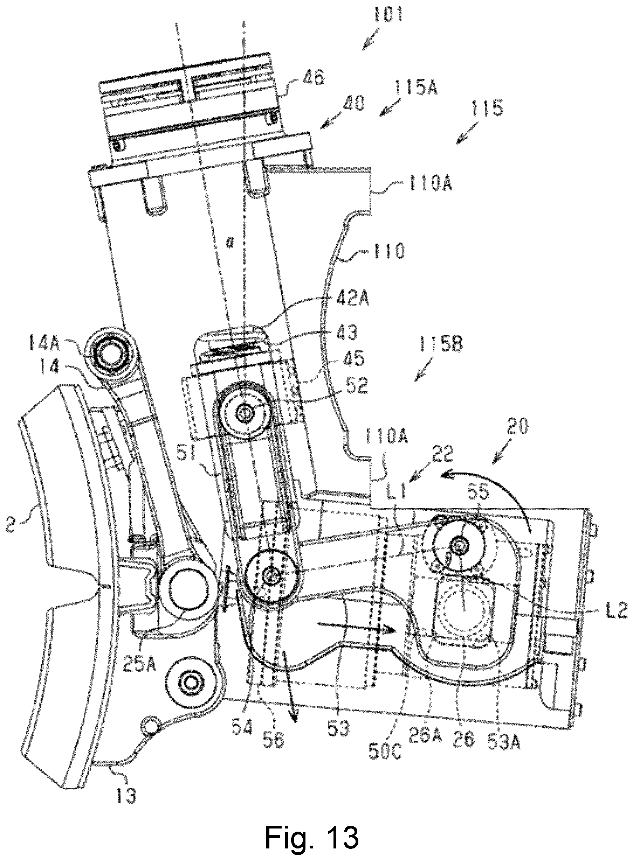

As shown in Fig. 13, while the brake block 2 is pressed against the tread of the wheel, the position of the wheel may change, and reaction force, which acts in the opposite direction to the pressing force, may act on the first drive unit 20 more significantly than anticipated. In this case, the reaction force of the pressing force applied by the first drive unit 20 may act upon the L-shaped levers 53, as a result of which the force is transmitted in the counterclockwise direction centered on the connecting pins 55 serving as the fulcrum. Accordingly, the arms 51 as well as the nut 45, feed screw 44 and piston 42 move downward. As the piston 42 moves downward, the absorbing spring 47B of the pushback mechanism 47 contracts to absorb the reaction force and pushes the piston 42 back.

### <Driving by Power from Supply Source 115A of Second Drive Unit 115>

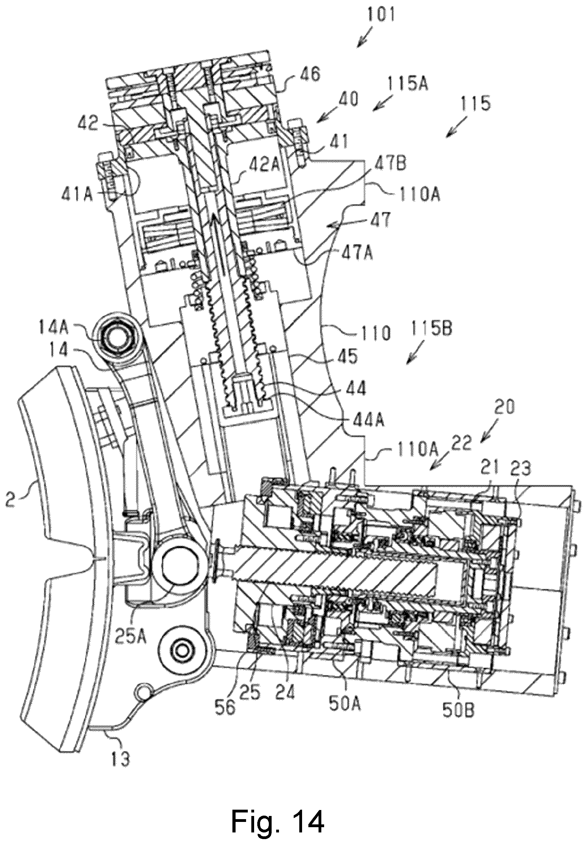

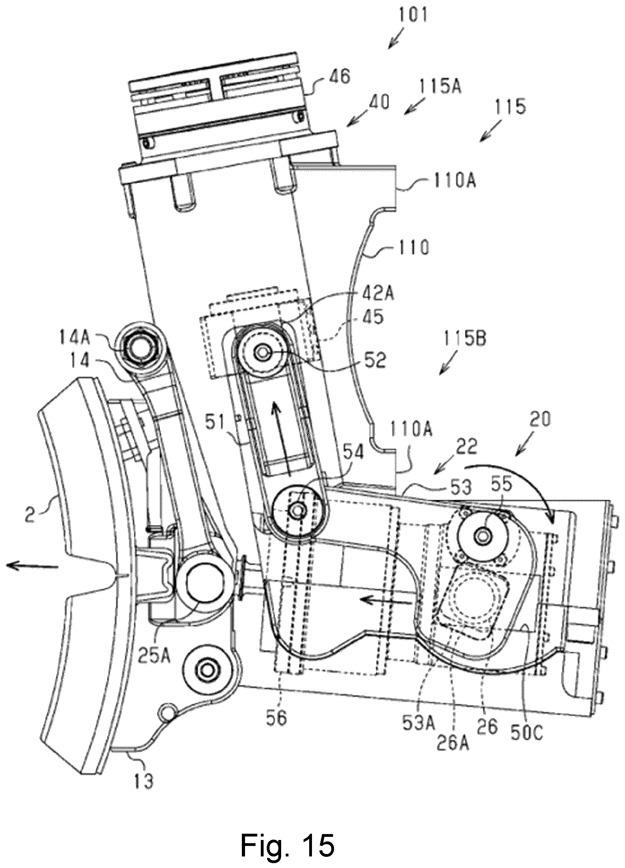

As shown in Figs. 14 and 15, the brake block 2 may be driven by the second pneumatic actuator 40 if the push rod 25 of the first drive unit 20 or electric motor 21 becomes stuck and the first drive unit 20 thus becomes incapable of driving the brake block 2. The second drive unit 115 serves as a security brake. To apply braking to the wheel, compressed air is fed into the working chamber 41A of the second pneumatic actuator 40. The piston 42 of the second pneumatic actuator 40 moves upward together with the feed screw 44. Since the feed screw 44 is restricted from rotating by the switch unit 46, the nut 45 and arms 51 also move upward. As the arms 51 move upward, the L-shaped levers 53 rotate clockwise around the connecting pins 55, which serve as the fulcrum, so that the first drive unit 20 accordingly moves toward the left direction in Fig. 15 via the connecting shaft 26. Together with the first drive unit 20, the push rod 25 and brake block 2 move toward the left direction in Fig. 15, so that the brake block 2 is pressed against the tread of the wheel to apply braking to the wheel. The pressing force depends on the pressure applied by the second pneumatic actuator 40.

As shown in Fig. 14, the first drive unit 20 butts up against the restricting unit 56 provided in the housing portion 50 of the casing 110, thereby stop moving further toward the left direction in Fig. 14. This can result in restricting the amount of movement of the first drive unit 20.

To release the braking applied to the wheel, the compressed air is discharged from the working chamber 41A of the second pneumatic actuator 40. The energizing force produced by the return spring 43 causes the piston 42, feed screw 44 and nut 45 to move downward. As the arms 51 as well as the nut 45 move downward, the L-shaped levers 53 rotate counterclockwise around the connecting pins 55, which serve as the fulcrum, so that the first drive unit 20 accordingly moves toward the right direction in Fig. 15 via the connecting shaft 26. Therefore, the brake block 2 moves away from the tread of the wheel, and the braking applied to the rotation of the wheel is released.

### <Return Spring 43 of Second Drive Unit 115 Releasing Braking>

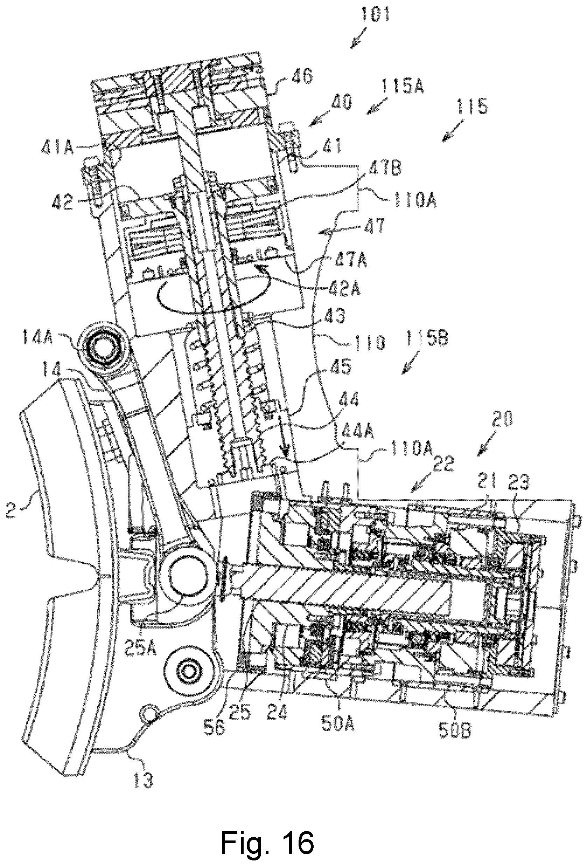

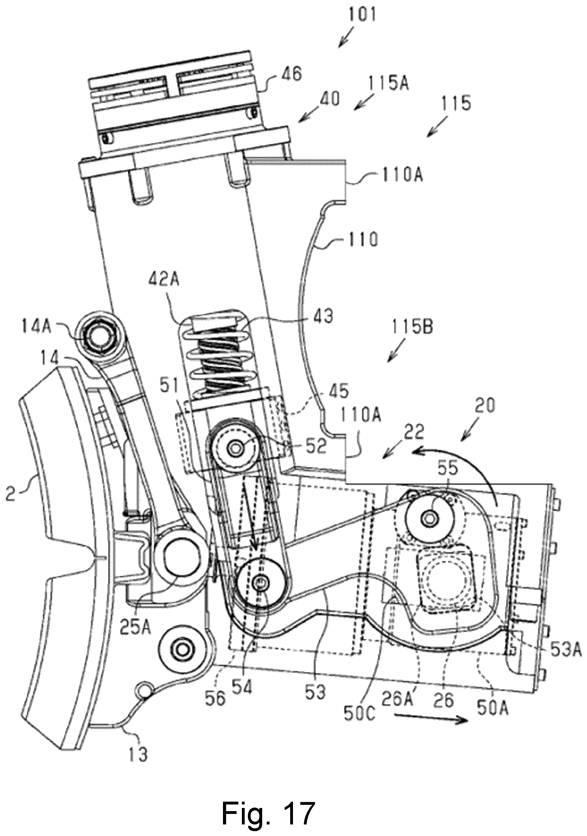

The push rod 25 or electric motor 21 of the first drive unit 20 may become stuck with the pressing force acting. In this case, or a non-loosening state, the switch unit 46 releases restriction on the feed screw 44 to allow the feed screw 44 to rotate as shown in Figs. 16 and 17. The reaction force of the pressing force results in the nut 45 being pulled downward, and the force stored in the return spring 43 is released. Therefore, the feed screw 44 rotates, and the nut 45 moves downward. As a result, the arms 51 as well as the nut 45 move downward, and the L-shaped levers 53 rotate counterclockwise around the connecting pins 55, which serve as the fulcrum, so that the first drive unit 20 accordingly moves toward the right direction in Fig. 17 via the connecting members 26A and connecting shaft 26. Even after the reaction force of the pressing force is eliminated, the first drive unit 20 remains its position that is reached by the movement toward the right direction in Fig. 17 since the nut 45 is energized as a result of the force stored in the return spring 43 having been released. Thus, the space between the brake block 2 and the wheel tread is maintained.

As shown in Fig. 14, the nut 45 stops moving downward by butting up against the restricting unit 44A at the tip end of the feed screw 44. This can result in restricting the amount of movement of the first drive unit 20. Since the restricting unit 44A only allows the nut 45 to move within a limited range, braking can be still applied by supplying air to the second pneumatic actuator 40 even if the uncoupling mechanism causes movement to the released position in the non-loosening state. In addition, since the first drive unit 20 remains at a fixed position, the first drive unit 20 can perform pressing.

### <Advantageous Effects of Third Embodiment>

Advantageous effects of the third embodiment will be now described. (3-1) If the conversion mechanism 22 becomes stuck or experiences other failures, the first drive unit 20 may become incapable of driving the brake block 2. In this case, the second drive unit 115 can cause the first drive unit 20 to move. Accordingly, the brake block 2 as well as the first drive unit 20 can be moved.

(3-2) The transmission mechanism 115B transmits power from the supply source 115A to the first drive unit 20 through the guide hole 50C, and the first and second bushings 50A and 50B, or the support portion, support the first drive unit 20 such that the first drive unit 20 can move toward the braking and releasing directions of the brake block 2. Therefore, the direction in which the first drive unit 20 is movable is defined, so that the first drive unit 20 can move stably.

(3-3) The first drive unit 20 is inserted into and supported by the first and second bushings 50A and 50B. Since the first drive unit 20 is supported at two points, the first drive unit 20 can move smoothly.

(3-4) The restricting unit 56 restricts the first drive unit 20 to move only within a predetermined range. The first drive unit 20 can be prevented from being moved more than necessary by the second drive unit 115.

(3-5) An excessive reaction force may be incurred during braking, but can be absorbed by the pushback mechanism 47, which is provided in the cylinder 41 of the second pneumatic actuator 40. There is thus no need of independently providing the pushback mechanism 47 from the first pneumatic actuator 40. Accordingly, the unit brake device 101 can be installed within a reduced space.

(3-6) The L-shaped levers 53 are connected to the opposing sides of the first drive unit 20. The L-shaped levers 53 can thus move the first drive unit 20 in a stable manner.

(3-7) The first drive unit 20 or second pneumatic actuator 40 may become stuck or experience other failures and become incapable of moving the brake block 2 while the brake block 2 is pressing the wheel. If such occurs, the switch unit 46 may release the energizing force of the return spring 43, so that the feed screw 44 and nut 45, which constitute the connecting mechanism, can move the first drive unit 20 to cause the brake block 2 to move toward the releasing direction. The brake block 2 as well as the first drive unit 20 can thus move away from the wheel. This can further contribute to safety since the braking can be released even if the first drive unit 20 or supply source 115A becomes stuck or experiences other failures.

(3-8) The second pneumatic actuator 40, which is the supply source 115A, is connected to the L-shaped levers 53 by means of the arms 51. Thus, the power from the supply source 115A is transmitted through the arms 51 and L-shaped levers 53. The second pneumatic actuator 40, which is the supply source 115A, can be located away from the first drive unit 20. This can prevent an increase in size of the first drive unit 20.

### <Fourth Embodiment>

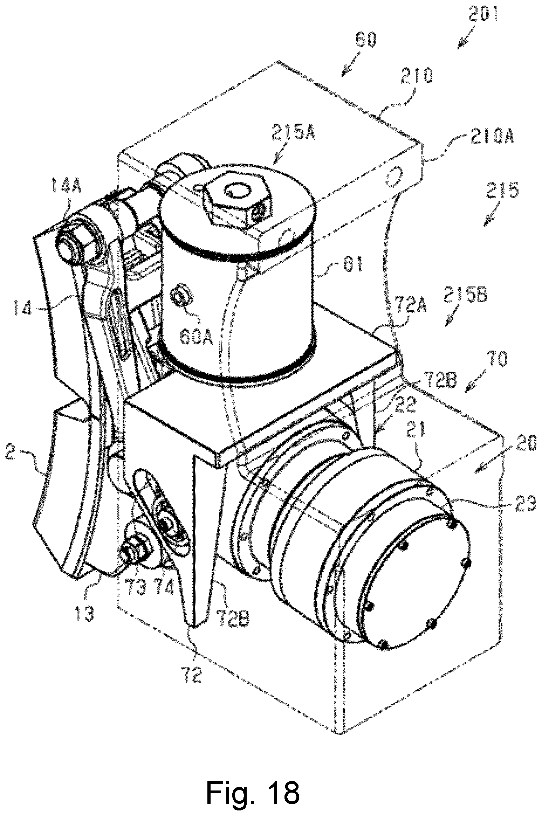

With reference to Figs. 18 to 25, the following describes a unit brake device according to a fourth embodiment. The fourth embodiment is different from the first embodiment described above in terms of the configuration of the second drive unit. The following description will be focused on the differences from the first embodiment.

### <Unit Brake Device 201>

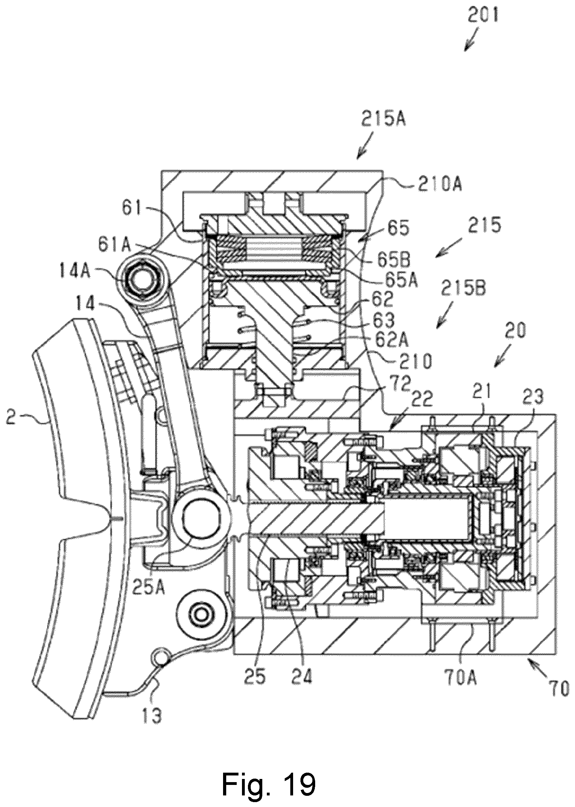

As shown in Figs 18 and 19, a unit brake device 201 has a first drive unit 20 and a second drive unit 215. The first drive unit 20 is configured in the same manner as in the first embodiment.

### <Second Drive Unit 215>

The second drive unit 215 drives the brake block 2 toward the braking and releasing directions by causing the first drive unit 20 to move. The second drive unit 215 has a supply source 215A and a transmission mechanism 215B. The supply source 215A feeds power to cause the first drive unit 20 to move toward the braking direction. The transmission mechanism 215B transmits the power from the supply source 215A to the first drive unit 20, thereby causing the first drive unit 20 to move toward the braking direction.

The unit brake device 201 has a casing 210 that houses the first and second drive units 20 and 215. The casing 210 has a mounting portion 210A on the rear side (the right side in Fig. 19) by which the casing 210 can be mounted onto a bogie of the railway vehicle. The inner wall of the casing 210 has a housing portion 70 where the first drive unit 20 is housed. The unit brake device 201 has a bushing 70A, which serves as a support portion. The bushing 70A is fixedly attached to the inner wall of the casing 210. The bushing 70A supports the first drive unit 20 such that it is movable in the direction in which the brake block 2 can move. The bushing 70A has a low coefficient of friction. For example, the bushing 70A is a metal bushing, a resin bushing, a linear bushing, or the like.

As shown in Fig. 18, the second drive unit 215 has a converting unit 72 for causing the first drive unit 20 to move. The converting unit 72 has a plate-shaped connection portion 72A, and arm portions 72B extending from the opposing ends of the connection portion 72A. The arm portions 72B are connected to the opposing sides of the first drive unit 20. The arm portions 72B of the converting unit 72 are connected to the first drive unit 20 via connecting shafts 74. The converting unit 72 has slanted holes 73, and the connecting shafts 74 butt up against the inner wall of the slanted holes 73. The converting unit 72 is connected to the supply source 215A configured to feed power. The converting unit 72 uses the slanted holes 73 to convert the direction of the power output from the supply source 215A from the output direction (the vertical direction in Fig. 19) into the direction in which the first drive unit 20 can move (the horizontal direction in Fig. 19). The resultant power from the converting unit 72 is used to cause the first drive unit 20 to move. The inner wall of the slanted holes 73 corresponds to a slope.

### <Third Pneumatic Actuator 60>

As shown in Fig. 19, the supply source 215A is a third pneumatic actuator 60. The third pneumatic actuator 60 has a bottomed cylinder 61 shaped like a tube, and a piston 62. The cylinder 61 receives compressed air. The piston 62 is moved by the compressed air to power the transmission mechanism 215B. The third pneumatic actuator 60 has a pushback mechanism 65. The third pneumatic actuator 60 is provided in the upper portion of the casing 210. The third pneumatic actuator 60 has a return spring 63, which energizes the piston 62. A piston rod 62A is provided at the tip end of the piston 62. The piston rod 62A is connected to the converting unit 72.

The cylinder 61 has a supply port 60A (see Fig. 18) through which compressed air is fed into the cylinder 61. The compressed air is fed to a working chamber 61A defined by the cylinder 61 and the piston 62. The third pneumatic actuator 60 operates as follows. As compressed air is supplied into the working chamber 61A, the piston rod 62A moves toward such a direction that the piston rod 42A protrudes out of the cylinder 61 (toward the lower side in Fig. 19). On the other hand, as compressed air is discharged from the working chamber 41A of the third pneumatic actuator 60, the return spring 63 causes the piston 62 to move toward the bottom side of the cylinder 61 (toward the upper side in Fig. 19).

The pushback mechanism 65 is provided in the bottom portion of the third pneumatic actuator 60. The pushback mechanism 65 has a piston 65A and an absorbing spring 65B. The piston 65A is coaxial with the piston 62 of the third pneumatic actuator 60. The absorbing spring 65B can energize the piston 65A of the pushback mechanism 65 in such a direction that the piston 65A may push the piston 62 of the third pneumatic actuator 60. The absorbing spring 65B does not apply force to the piston 65A in a normal circumstance. Upon application of a reaction force from the converting unit 72, the absorbing spring 65B absorb the movement of the piston 65A and pushes the piston 65A back.

### <How Fourth Embodiment Works>

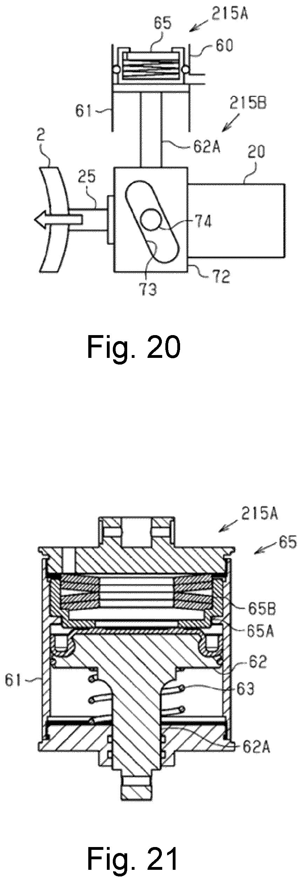

The following now describes how the unit brake device 201 configured as described above works with reference to Figs. 20 to 24.

### <Normal Circumstance>

As shown in Figs. 20 and 21, the piston rod 62A and converting unit 72 stay stationary in a normal circumstance unless the third pneumatic actuator 60 is in operation. Therefore, the first drive unit 20 stays at fixed position. The first drive unit 20 drives the electric motor 21 to cause the push rod 25 to move toward the braking direction, or toward the left direction in Fig. 20, so that the brake block 2 is pressed against the tread of the wheel. As a result, braking is applied to the wheel. Alternatively, the first drive unit 20 drives the electric motor 21 in the opposite direction to cause the push rod 25 to move toward the releasing direction, or toward the right direction in Fig. 20, so that the brake block 2 moves away from the tread of the wheel. As a result, braking applied to the wheel is released.

### <During Pressing>

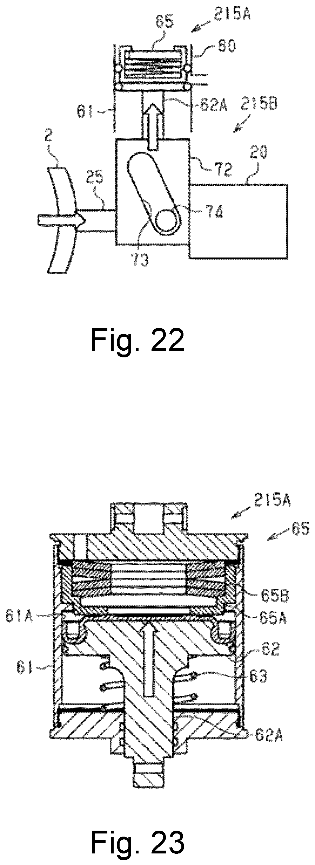

As shown in Figs. 22 and 23, while the brake block 2 is pressed against the tread of the wheel, the position of the wheel may change, and reaction force, which acts in the opposite direction to the pressing force, may act on the first drive unit 20 more significantly than anticipated. In this case, the reaction force of the pressing force applied by the first drive unit 20 may act upon the converting unit 72, and the force may be transmitted to the piston 62. The absorbing spring 65B of the pushback mechanism 65 may contact to absorb the reaction force and pushes the piston 62 back.

### <Driving by Power from Supply Source 215A of Second Drive Unit 215>

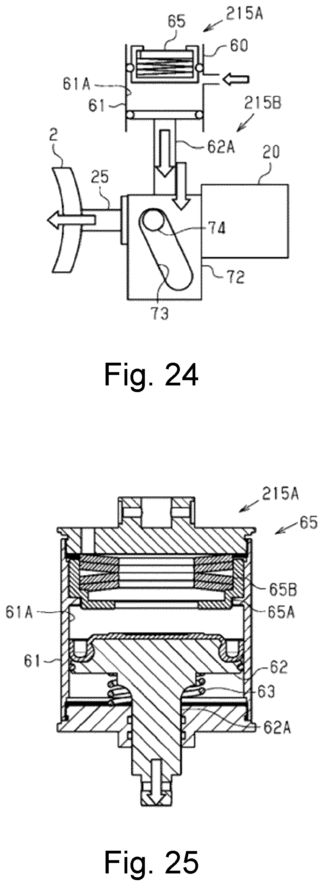

As shown in Figs. 24 and 25, the brake block 2 may be driven by the third pneumatic actuator 60 if the push rod 25 of the first drive unit 20 or electric motor 21 becomes stuck and the first drive unit 20 becomes incapable of driving the brake block 2. The second drive unit 215 serves as a security brake. To apply braking to the wheel, compressed air is fed into the working chamber 61A of the third pneumatic actuator 60. The piston 62 of the third pneumatic actuator 60 moves downward. The converting unit 72 also moves downward, and the connecting shafts 74 are moved toward the left direction in Fig. 24 through the slanted holes 73 of the converting unit 72, and the first drive unit 20 also moves toward the left direction in Fig. 24. As a result, the brake block 2 is pressed against the tread of the wheel, and braking is applied to the wheel. The pressing force depends on the pressure applied to the third pneumatic actuator 60.

To release the braking applied to the wheel, the compressed air is discharged from the working chamber 61A of the third pneumatic actuator 60. The energizing force produced by the return spring 63 causes the piston 62 to move upward. As the piston 62 moves upward, the converting unit 72 also moves upward. The connecting shafts 74 are moved toward the right direction in Fig. 24 through the slanted holes 73 of the converting unit 72, and the first drive unit 20 also moves toward the right direction in Fig. 24. As a result, the brake block 2 moves away from the tread of the wheel, and braking applied to the rotation of the wheel is released.

### <Advantageous Effects of Fourth Embodiment>

Advantageous effects of the fourth embodiment will be now described. (4-1) If the conversion mechanism 22 becomes stuck or experiences other failures, the first drive unit 20 may become incapable of driving the brake block 2. In this case, the second drive unit 215 can cause the first drive unit 20 to move. Accordingly, the brake block 2 as well as the first drive unit 20 can be driven.

(4-2) The bushing 70A, which is a support portion, supports the first drive unit 20 such that it is movable toward the braking and releasing directions of the brake block 2. This defines the direction in which the first drive unit 20 can move when moved by the second drive unit 215, so that the first drive unit 20 can move in a stable manner.

(4-3) An excessive reaction force may be incurred during braking, but can be absorbed by the pushback mechanism 65, which is provided in the cylinder 61 of the third pneumatic actuator 60. There is thus no need of independently providing the pushback mechanism 65 from the third pneumatic actuator 60. Accordingly, the unit brake device 201 can be installed within a reduced space.

(4-3) The power to cause the first drive unit 20 to move is transmitted from the third pneumatic actuator 60, which is the supply source 215A, via the converting unit 72. The third pneumatic actuator 60 can be thus located away from the first drive unit 20. This can prevent an increase in size of the first drive unit 20.

### <Other Embodiments>

The above embodiments can be modified as described below. The above embodiments and the following modifications can be implemented in combination to the extent where they are technically consistent with each other.

In the foregoing embodiments, a pneumatic actuator is employed as the supply source. However, the pneumatic actuator may be replaced by any other actuators such as electric actuators or spring cylinders.

In the foregoing embodiments, the electric motor 21 is used as the source of the power for the first drive unit 20. However, the power source is not limited to the electric motor and can be any other actuators such as electric cylinders, pneumatic actuators or springs.

The foregoing embodiments uses the pushback mechanism to absorb the reaction force of the pressing force, but may be implemented without the pushback mechanism. In the third embodiment, the inner surface of the casing 110 has the restricting unit 56, which can engage with the outer surface of the first drive unit 20 to allow the first drive unit 20 to move only within a limited range. Alternatively, the outer surface of the first drive unit 20 may have a restricting unit that can engage with the inner surface of the casing 110 to allow the first drive unit 20 to move only within a limited range.

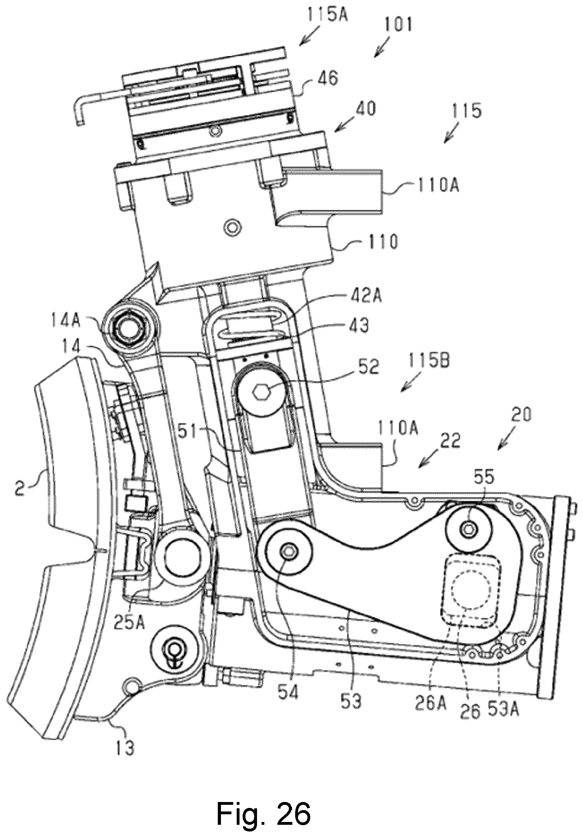

In the third embodiment, each L-shaped lever 53 has the connecting pin 55 serving as the fulcrum at the corner of the L shape, the connecting shaft 26 serving as the point of action at one end, and the connecting pin 54 serving as the point of force at the other end. Alternatively, as shown in Fig. 26, each L-shaped lever 53 may have the connecting shaft 26 serving as the point of action at the corner of the L shape, the connecting pin 55 serving as the fulcrum at one end, and the connecting pin 54 serving as the point of force at the other end. The levers may be shaped in any manner as long as they have a fulcrum, a point of action, and a point of force.

In the first and second embodiments described above, the end 11C of the lever 11 extends over the opposing sides of the first drive unit 20. However, the first drive unit 20 may be connected only at one side to the lever 11.

In the third embodiment, the L-shaped levers 53 are provided on the opposing sides of the first drive unit 20. However, an L-shaped lever 53 may be provided on only one side of the first drive unit 20. In the third embodiment, the transmission of power from the supply source 115A is cut off by the nut 45, feed screw 44, and switch unit 46. Any other mechanisms, however, may be employed as long as they can cut off the transmission of power from the supply source 115A. The switch unit 46 may be operated by an electrical signal or manually.

In the third embodiment, as shown in Fig. 13, the angle α of the second drive unit 115 including the second pneumatic actuator 40 with respect to the vertical direction can be changed by changing the angle θ of the L-shaped levers 53 to deal with the interference with the wheel or bogie.

In the third embodiment, the ratio of the distance L1 to the distance L2 (L1:L2) is 3:1, as shown in Fig. 13, where the distance L1 represents the distance between the fulcrum and the point of force and the distance L2 represents the distance between the fulcrum and the point of action. However, the ratio can be set arbitrarily according to the capacity of the supply source 115A.

In the third and fourth embodiments, the one or more bushings fixedly attached to the casing 110, 210 serve as the support portion to support the first drive unit 20. However, a slide rail, a bearing, or other mechanisms may be provided as the support portion between the casing 110, 210 and the first drive unit 20.

In the third and fourth embodiments, the one or more bushings fixedly attached to the casing 110, 210 support the first drive unit 20. However, the casing 110, 210 itself may serve as the support portion to movably support the first drive unit 20.

In the foregoing embodiments, the second drive unit 15, 115, 215 is located away from the first drive unit 20 by means of the transmission mechanism 15B, 115B, 215B. However, the second drive unit may be configured to operate in a direction parallel to the braking direction of the first drive unit 20 and located above, below or next to the first drive unit 20. The second drive unit may still cause the first drive unit 20 to move.

In the foregoing embodiments, the second drive unit 15, 115, 215 serves as a security brake that can drive the brake block 2 in place of the first drive unit 20. However, the second drive unit 15, 115, and 215 may cause the first drive unit 20 to move in order to drive the brake block 2 in a normal circumstance, and the first drive unit 20 may serve as a security brake to drive the brake block 2 if the second drive unit 15, 115, 215 fails to operate.

In the foregoing embodiments, the second drive unit 15, 115, 215 may be provided to cause the first drive unit 20 to move toward the releasing direction if the first drive unit 20 becomes stuck while pressing the brake block 2 against the wheel or in the braking state. In this manner, the second drive unit 15, 115 and 215 can loosen the brake block 2 if the first drive unit 20 becomes stuck while the brake block 2 is in the braking state.

In the foregoing embodiments, the second drive unit 15, 115, 215 may be provided to cause the first drive unit 20 to move toward the braking direction if the first drive unit 20 becomes stuck while the brake block 2 is away from the wheel or in the released state. In this manner, the second drive unit 15, 115 and 215 can cause the brake block 2 to move toward the braking direction if the first drive unit 20 becomes stuck while the brake block 2 is in the released state.

The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

## Claims

1. A unit brake device (1, 101, 201) comprising:
a first drive unit (20) including an electric motor (21) and a conversion mechanism (22) for converting rotational motion of the electric motor into linear motion, the first drive unit (20) being configured to use the linear motion to drive a brake block (2) toward a braking direction and toward a releasing direction that is opposite to the braking direction; and
a second drive unit (15, 115, 215) configured to drive the brake block (2) toward at least one of the braking direction or the releasing direction by causing the first drive unit (20) to move.

2. The unit brake device (1, 101, 201) of claim 1,
wherein the second drive unit (15, 115, 215) includes:
a supply source (15A, 115A, 215A) configured to feed power; and
a transmission mechanism (15B, 115B, 215B) configured to transmit the power from the supply source (15A, 115A, 215A) to the first drive unit (20) to cause the first drive unit (20) to move toward the braking direction.

3. The unit brake device (101) of claim 2, further comprising:
a casing (110) housing the first drive unit (20), the casing (110) having a guide hole (50C) extending along the braking direction and the releasing direction; and
a support portion (50A, 50B) supporting the first drive unit (20) in such a manner that the first drive unit (20) is movable toward the braking direction and the releasing direction in the casing (110),
wherein the transmission mechanism (115B) is configured to transmit the power from the supply source (115A) to the first drive unit (20) through the guide hole (50C).

4. The unit brake device (101) of claim 3,
wherein the support portion has a first bushing (50A) and a second bushing (50B) receiving therein the first drive unit (20), and
wherein the first bushing (50A) is located between the brake block (2) and the second bushing (50B) in a direction in which the first drive unit (20) is movable.

5. The unit brake device (101) according to claim 3 or 4. wherein one of (i) an inner surface of the casing (110) or (ii) an outer surface of the first drive unit (20) has a restricting unit (56) configured to engage with another one of (i) the inner surface of the casing (110) or (ii) the outer surface of the first drive unit (20) to allow the first drive unit (20) to move within a limited range.

6. The unit brake device (1, 101, 201) of claim 2,
wherein the supply source (15A, 115A, 215A) is a pneumatic actuator (30, 40, 60) having:
a cylinder (31, 41, 61) configured to receive compressed air fed thereto; and
a piston (32, 42, 62) configured to move upon application of the compressed air to feed power to the transmission mechanism (15B, 115B, 215B),
wherein the pneumatic actuator (30, 40, 60) has a pushback mechanism (35, 47, 65) housed in the cylinder (31, 41, 61), the pushback mechanism (35, 47, 65) being configured to energize the piston (32, 42, 62), and
wherein the pushback mechanism (35, 47, 65):
keeps the piston (32, 42, 62) at a fixed position relative to the cylinder (31, 41, 61) unless a force of a predetermined magnitude or greater acts upon the first drive unit (20) toward the braking direction; and
allows the piston (32, 42, 62) to move relative to the cylinder (31, 41, 61) if the force of the predetermined magnitude or greater acts on the first drive unit (20).

7. The unit brake device (101) of claim 2,
wherein the transmission mechanism (115B) includes:
a connecting mechanism (44, 45) connecting the supply source (115A) and the first drive unit (20) in such a manner that the supply source (115A) and the first drive unit (20) are movable relative to each other,
an elastic member (43) for energizing the connecting mechanism (44, 45); and
a switch unit (46) configured to switch between (i) a force storing state where the elastic member (43) stores force and (ii) a releasing state where the force storing state is released,
wherein, when the switch unit (46) establishes the force storing state, the power from the supply source (115A) is transmitted to the first drive unit (20) via the transmission mechanism (115B) and the first drive unit (20) moves toward the releasing direction, and
wherein, when the switch unit (46) establishes the releasing state, the elastic member (43) energizes the connecting mechanism (44, 45), and the connecting mechanism (44, 45) causes the first drive unit (20) to move toward the releasing direction.

8. The unit brake device (101) of claim 7,
wherein the connecting mechanism (44, 45) includes:
a feed screw (44) connected to the supply source (115A); and
a nut (45) engaging with the feed screw (44), the nut (45) being configured to move relative to the feed screw (44),
wherein the switch unit (46) is an electromagnetic brake.

9. The unit brake device (1, 101) of claim 2, wherein the transmission mechanism (15B, 115B) has a lever (11, 53) connected to the first drive unit (20) at a point of action (11C) and to the supply source (15A, 115A) at a point of force (11A).

10. The unit brake device (1, 101) of claim 9, wherein the lever (11, 53) is connected to opposing sides of the first drive unit (20) and supports the first drive unit (20).

11. The unit brake device (101) of claim 9, wherein the transmission mechanism (115B) has an arm (51) connecting the supply source (115A) and the lever (53).

12. The unit brake device (201) of claim 2, wherein the transmission mechanism (215B) further includes
a converting unit (72) configured to convert the power output from the supply source (215A) by changing an output direction of the power into a direction in which the first drive unit (20) is movable by means of a slope, in order to use the power to cause the first drive unit (20) to move .
